(19) Europäisches Patentamt
European Patent Office
Office européen des brevets

(11) **EP 4 282 667 B1**

(12) **EUROPEAN PATENT SPECIFICATION**

(45) Date of publication and mention
of the grant of the patent:
**01.04.2026 Bulletin 2026/14**

(21) Application number: **21921190.1**

(22) Date of filing: **05.11.2021**

(51) International Patent Classification (IPC):
*B60C 13/00* (2006.01)  *B60C 9/00* (2006.01)
*B60C 9/09* (2006.01)  *B60C 15/00* (2006.01)
*B60C 9/04* (2006.01)  *B60C 9/02* (2006.01)

(52) Cooperative Patent Classification (CPC):
**B60C 9/09; B60C 15/0018;** B60C 13/00;
B60C 2009/0215; B60C 2009/0475

(86) International application number:
**PCT/JP2021/040881**

(87) International publication number:
**WO 2022/158087 (28.07.2022 Gazette 2022/30)**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2021 JP 2021009058**

(43) Date of publication of application:
**29.11.2023 Bulletin 2023/48**

(73) Proprietor: **BRIDGESTONE CORPORATION
Chuo-ku
Tokyo 104-8340 (JP)**

(72) Inventors:
• **HATANAKA, Shintaro**
  **Tokyo 104-8340 (JP)**
• **KUWAYAMA, Isao**
  **Tokyo 104-8340 (JP)**

(74) Representative: **Marks & Clerk LLP
15 Fetter Lane
London EC4A 1BW (GB)**

(56) References cited:
EP-A1- 1 769 947          JP-A- 2004 268 735
JP-A- 2011 037 339        JP-A- 2014 031 093
JP-A- H0 558 119          JP-A- H0 558 119
JP-A- H0 930 217          JP-A- H04 208 609
JP-A- H04 278 806         JP-A- H06 199 113
JP-A- H06 199 113         JP-A- H07 144 513
JP-A- H07 144 513         JP-A- H08 310 206
JP-A- H1 159 136          JP-A- S 624 615
JP-A- S6 288 601          KR-A- 19990 047 137
US-A1- 2017 072 750

**Description**

TECHNICAL FIELD

The present invention relates to a pneumatic tire.

BACKGROUND

In general, it is desirable to increase the cornering power of pneumatic tires.

Especially in recent years, fuel efficiency can be improved by simplifying tire structures and reducing their weights, such as by thinning rubber in the sidewall portions or reducing the height of the bead fillers (for example, Patent Literature 1 [PTL 1]). In such cases, there is a concern about a decrease in cornering power, due to a decrease in lateral spring coefficient in particular.

JPH0558119A discloses a pneumatic radial tire for heavy duty is composed of a radial carcass formed by applying rubber coating to at least one layer of steel cords straddling a pair of bead cores in the toroidal form, a laminate belt formed by applying rubber coating to at least three layers of steel cords outside of this radial carcass in the radial direction, and a tread arranged outside of this laminate belt in the radial direction. At least one side reinforcing layer alongside the radial carcass is arranged outside of the radial carcass in the region stretching from the buttress part of the tire and going beyond its max. width point.

JPH06199113A discloses a pneumatic tire composed of a ring shaped tread, a pair of side walls and ring shaped bead portions and the bead portion have a bead core embedded therein while a carcass of one ply and a ring shaped belt layer is arranged on the outer side of the carcass. The side wall facing the outer side of a vehicle is provided on the outer side of its carcass with a polyamide fiber layer composed of an aromatic polyamide fiber or an aliphatic polyamide fiber extending inward in the radial direction along the carcass and

the space 'd' between a side end portion and the end portion of a No.1 belt is made wider than 0 but narrower than 15mm. Fiber cord angle theta, which is the angle formed by the polyamide fiber cord, constituting the polyamide fiber layer, against the tire radial direction, is 30 to 90 degrees.

JPH07144513A discloses a side wall part provided with a protecting layer with a reinforcing rubber layer interposed on the outside in the tire radial direction of a carcass from a buttress part on the outside in the radial direction to a position going radially inward over the maximum width position of the maximum width of the side wall part. This protecting layer is formed of at least one reinforcing ply with organic fiber cords inclined by 45-75 deg. to the circumferential direction of a tire. The reinforcing rubber layer has a JISA hardness of 56-63 deg. and has a thickness 0,24-0.55 times as thick as the thickness of side wall rubber in the maximum width position. The weight increase of the tire can be thereby suppressed while improving the cutting-through resistance of the side wall part.

EP1769947A1 discloses a pneumatic tire according to the present invention includes a first side reinforcement layer and a second side reinforcement layer. The first side reinforcement layer has a plurality of reinforcement cords, and the second side reinforcement layer has a plurality of reinforcement cords each crossing the reinforcement cords. Additionally, an inclination angle of each of the reinforcement cords and the reinforcement cords with respect to a circumferential line extending in a circumferential direction of the pneumatic tire is 5 to 30 degrees. According to the pneumatic tire, high speed durability thereof can be further enhanced without reducing wear life of a shoulder portion thereof.

US 2017/072750 A1 discloses a tire including: a pair of beads; a carcass that is extended on and between the beads on both sides; and a pair of strips that extend almost outward from the beads along the carcass in the radial direction. The beads include cores, first apexes, and second apexes. The carcass includes a carcass ply, and the carcass ply includes a main portion and turned-up portions. The turned-up portions are disposed between the first apexes and the second apexes. The turned-up portions contact with the main portion in portions radially outward of outer ends of the first apexes. A position of an outer end of each strip is equal, in the radial direction, to a position at which the maximum width is obtained, or the outer end of each strip is disposed radially inward of the position at which the maximum width is obtained.

CITATION LIST

Patent Literature

PTL 1: JP 2019-137327 A

SUMMARY

(Technical Problem)

It would therefore be helpful to provide a pneumatic tire that can prevent a decrease in cornering power.

(Solution to Problem)

According to a first aspect of the invention there is provided a pneumatic tire as specified in claim 1.

Herein, the "tire maximum width position" refers to a position where the width in the tire width direction of the pneumatic tire becomes maximum in the cross-section in the tire width direction in the aforementioned reference state.

Herein, an "applicable rim" refers to a standard rim (which is called a measuring rim in STANDARDS MANUAL of the European Tyre and Rim Technical Organisation [ETRTO], and a design rim in YEAR BOOK of the Tire and Rim Association, Inc. [TRA]) of an applicable size that is described or will be described in industrial standards valid for a region in which the tire is produced or used. Examples of the industrial standards include JATMA Year Book of the Japan Automobile Tyre Manufacturers Association (JATMA) in Japan, STANDARDS MANUAL of the ETRTO in Europe, and YEAR BOOK of the TRA in the United States of America (that is, the "rim" includes any size currently included and any size which will be possibly included in the industrial standards. Examples of the "size which will be described" include those described as "FUTURE DEVELOPMENTS" in the ETRTO 2013 edition). As for sizes not described in the industrial standards, a "rim" refers to a rim having a width corresponding to the bead width of the tire.

Moreover, a "specified internal pressure" refers to an air pressure (maximum air pressure) corresponding to the maximum load capability of a single wheel of an applicable size/ply rating specified by the JATMA or the like. As for sizes not described in the industrial standards, a "specified internal pressure" refers to an air pressure (maximum air pressure) corresponding to the maximum load capability determined depending on a vehicle to which the tire is mounted.

(Advantageous Effect)

According to the present invention, a pneumatic tire that can prevent a decrease in cornering power can be provided.

BRIEF DESCRIPTION OF THE DRAWINGS

In the accompanying drawings:

FIG. 1 is a partial cross-sectional view taken along a tire width direction of a pneumatic tire according to an embodiment of the present invention; and
FIG. 2 schematically illustrates a reinforcing member reducing shear deformation.

DETAILED DESCRIPTION

In the following, embodiments of the present invention will be described in detail by illustration with reference to the drawings.

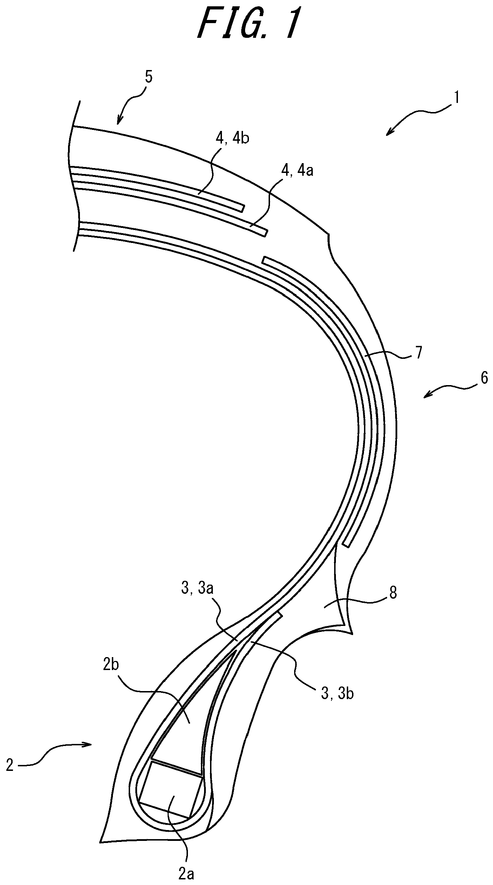

FIG. 1 is a partial cross-sectional view taken along a tire width direction of a pneumatic tire (hereinafter referred to simply as a tire) according to an embodiment of the present invention. FIG. 1 illustrates a cross-section in the tire width direction in the aforementioned reference state.

The tire 1 includes a pair of bead portions 2, and a carcass 3 including one or more carcass plies of radially arranged cords that extend in a toroidal form between the pair of bead portions 2.

In this example, each bead portion 2 includes a bead core 2a and a bead filler 2b disposed on an outer side in a tire radial direction of the bead core 2a. The bead core 2a in this example includes a plurality of bead wires that are surrounded by a rubber coating. The bead wires in this example are formed by steel cords. In this example, the bead filler 2b is made of rubber or the like and has a substantially triangular cross-sectional shape with a thickness decreasing toward the outer side in the tire radial direction. In the present invention, however, the tire 1 may also be configured without bead cores 2a or bead fillers 2b.

Here, the height of the bead fillers 2b (measured in the tire radial direction) is preferably 8 to 25 mm, as in this example. This is because setting the height of the bead fillers 2b to 8 mm or more can prevent air entry during manufacturing, while setting the height of the bead fillers 2b to 25 mm or less can reduce the weight of the tire. For the same reason, it is more preferable to set the height of the bead fillers 2b to 10 to 15 mm.

The carcass 3 in this example includes a carcass body portion 3a that extends in a toroidal form between the pair of bead portions 2, and carcass fold-up portions 3b that are folded from the carcass body portion 3a around the bead cores 2a from the inner side in the tire width direction to the outer side in the tire width direction. Organic fibers, such as PET, hybrid cords made of two types of organic fiber cords (e.g., nylon and aramid) twisted together, or the like may be used as carcass cords. As mentioned above, the carcass plies are plies of radially arranged cords.

In this example, outer ends in the tire radial direction of the carcass fold-up portions 3b are located further inward in the tire radial direction than the tire maximum width position and are located further outward in the tire radial direction than outer ends in the tire radial direction of the bead fillers 2b. With this configuration, the weight of the tire can be further reduced.

As illustrated in FIG. 1, on the outer side in the tire radial direction of a crown portion of the carcass 3, there is a belt 4, which includes one or more (two in the illustrated example) belt layers 4a and 4b. Belt cords of the belt layers 4a and 4b intersect each other between the layers and extend at an inclination angle of 30° to 60° in this example with respect to a tire circumferential direction. Steel cords can be used for the belt cords, but organic fiber cords can also be used to reduce weight. A tread portion 5 made of tread rubber is disposed on the outer side in the tire radial direction of the belt 4.

As illustrated in FIG. 1, a pair of sidewall portions 6 are connected between the pair of bead portions 2 and the tread portion 5. Here, the rubber gauge (thickness of rubber measured in a direction perpendicular to outer surfaces of the sidewall portions 6 in the cross-section in the tire width direction in the aforementioned reference state) at the tire maximum width position is preferably 1 mm or more but 3 mm or less, as in this example. Setting the rubber gauge at the tire maximum width position to 1 mm or more can ensure minimum side-cut resistance, while setting the rubber gauge at the maximum width position of the tire to 3 mm or less can reduce the weight of the tire.

Here, as illustrated in FIG. 1, the tire 1 according to the present embodiment is provided with a reinforcing member 7, which extends at an angle with respect to the tire radial direction in an area including the tire maximum width position that stretches in the tire radial direction on the outer side in the tire width direction of the carcass 3. Additionally, in the illustrated example, the reinforcing member 7 has an arc shape along the carcass body portion 3a in the cross-section, but it may have other shapes, such as a straight line.

In this example, the reinforcing member 7 includes organic fiber cords. Examples the organic fiber cords include organic fibers, such as PET, or hybrid cords made of two types of organic fiber cords (e.g., a nylon cord and an aramid cord) twisted together. The Young's modulus of the cords of the reinforcing member 7 (tested by JIS L1017 8.5 a] [2002] and determined in accordance with JIS L1017 8.8 [2002]) is not particularly limited, but can be 3000 to 5000 GPa, the number of cords of the reinforcing member 7 can be 20 to 70 cords/50 mm, and the cord diameter of the cords of the reinforcing member 7 can be 0.3 to 0.9 mm. Although it is preferable to dispose one layer of reinforcing member from the viewpoint of weight reduction, two or more layers can be disposed, and in such cases, it is preferable to adjust the Young's modulus, the number, and the diameter of the cords so that they can be reduced to be substantially equal to those of one layer in terms of stiffness and weight reduction.

As in this example, the reinforcing member 7 preferably extends at an angle of 30° to 60° with respect to the tire radial direction, and more preferably, it extends at an angle of 40° to 50° with respect to the tire radial direction.

The length in the tire radial direction of the reinforcing member 7 is preferably 10 to 40%, and more preferably 15 to 35% of the height of the cross-section of the tire. Disposing the reinforcing member 7 at an appropriate cross-sectional height can control cornering power, maintain appropriate ride comfort, and reduce weight increase, thereby improving fuel efficiency.

Here, as illustrated in FIG. 1, the tire 1 according to the present embodiment is provided with rubber chafers 8 on the outer side in the tire width direction of the bead fillers 2b. The length in the tire radial direction of the rubber chafers 8 is preferably 30 to 60 mm.

Outer ends in the tire radial direction of the rubber chafers 8 are preferably located further outward in the tire radial direction than the rim separation point. Inner ends in the tire radial direction of the rubber chafers 8 are located further inward in the tire radial direction than inner ends in the tire radial direction of the bead cores 2a. As illustrated in FIG. 1, in this example, the rubber chafers 8 extend further outward in the tire radial direction than the apex of a rim guard from the vicinity of a bead base line (imaginary line passing through bead bases and extending parallel to the tire width direction) in an area stretching in the tire radial direction. Here, the "rim separation point" refers to a point at which an outer surface of the tire separates from the rim flange when the pneumatic tire is in the reference state in which it is mounted on an applicable rim, a specified internal pressure is applied, and no load is applied

In the present embodiment, the rubber chafers 7 are made of highly elastic rubber, and specifically, when the storage modulus of the bead fillers 2b is E1' and the storage modulus of the rubber chafers 7 is E2', the ratio E2'/E1' satisfies

$$0.4 \leq E2'/E1' \leq 1.$$

Herein, a "storage modulus" refers to a value measured at a temperature of 25°C in accordance with JIS K7244.

Advantageous effects of the pneumatic tire according to the present embodiment will be described below.

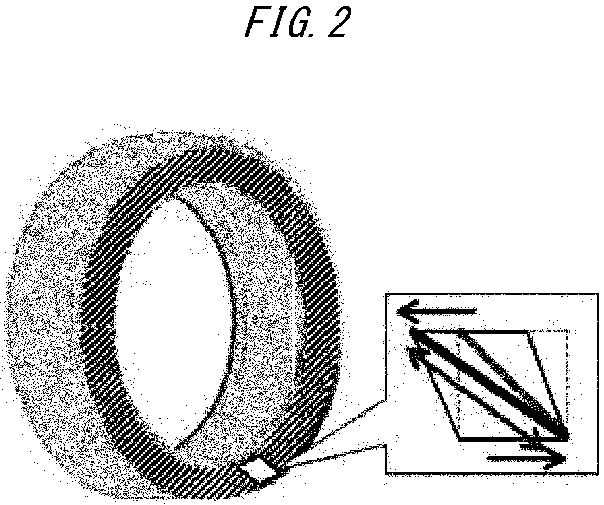

In the pneumatic tire according to the present embodiment, first of all, the height of the bead fillers 2b is 25 mm or less, the outer ends in the tire radial direction of the carcass fold-up portions 3b are located further inward in the tire radial direction than the tire maximum width position, and the rubber gauge at the tire maximum width position is 3 mm or less, and the material of the carcass cords is an organic fiber, such as PET, or a hybrid cord made of two types of organic fibers. Accordingly, the weight of the tire can be reduced. As mentioned above, such a tire may suffer a decrease in cornering power due to a decrease in lateral spring coefficient. The present inventors have conducted studies and found that the cause of a decrease in lateral spring coefficient is that lateral displacement is concentrated directly under the load and the surrounding area is pulled in the direction of the load, causing an increase in shear deformation on the circumference. For this reason, the tire according to the present embodiment is provided with the reinforcing member 7, which extends at an angle with respect to the tire radial direction in an area including the tire maximum width position that stretches in the tire radial direction on the outer side in the tire width direction of the carcass 3. As a result, as schematically illustrated in FIG. 2, two forces pulling in opposite direction act on the reinforcing member 7 during shear deformation, thereby reducing the shear deformation. This can prevent a decrease in lateral spring coefficient and prevents a decrease in cornering power.

As described above, the pneumatic tire according to the present embodiment can prevent a decrease in cornering power, while reducing the weight of the tire.

Additionally, although it is particularly effective in the aforementioned lightweight configuration as in the present embodiment, even in a case in which the aforementioned lightweight configuration is not adopted, the effect of preventing a decrease in cornering power can be obtained, because two forces pulling in the opposite directions act on the reinforcing member 7 during shearing deformation.

Here, the reinforcing member preferably includes organic fiber cords. Since organic fibers are lightweight despite their rigidity, weight increase due to the addition of the reinforcing member can be minimized.

The reinforcing member preferably extends at an angle of 30° to 60° with respect to the tire radial direction, and more preferably, it extends at an angle of 40° to 50° with respect to the tire radial direction. The effect of reducing shear deformation illustrated schematically in FIG. 2 becomes most significant when the inclination angle of the reinforcing member with respect to the tire radial direction is close to approximately 45°, and therefore, setting the above range can further prevent a decrease in cornering power.

The length in the tire radial direction of the reinforcing member is preferably 10 to 40% of the height of the cross-section of the tire. Setting the length to 10% or more further ensures that the effect of preventing a decrease in cornering power can be obtained, while setting the length to 40% or less can minimize weight increase due to the addition of the reinforcing member. In an example, an outer end in the tire radial direction of the reinforcing member can be at a position corresponding to 50 to 80% of the height of the cross-section of the tire from the bead base line (imaginary line passing through bead bases and extending parallel to the tire width direction), and an inner end in the tire radial direction of the reinforcing member can be at a position corresponding 15 to 40% of the height of the cross-section of the tire from the bead base line. The length in the tire radial direction of the reinforcing member can be, but is not particularly limited to, 15 to 40 mm.

The tire according to the present invention is preferably a pneumatic radial tire for passenger vehicles.

In an example, the tire has a shape with a narrow width and a large diameter, with a tire cross-sectional width SW of less than 165 (mm) and with a ratio SW/OD of the tire cross-sectional width SW to the outer diameter OD of 0.26 or less. Setting the tire cross-sectional width SW to be narrower than the tire outer diameter OD can reduce air resistance, and increasing the tire outer diameter OD relative to the tire cross-sectional width SW can reduce deformation of the tread rubber in the vicinity of a ground-contacting surface of the tire, thereby reducing rolling resistance. This can improve the fuel efficiency of the tire. The ratio SW/OD is preferably 0.25 or less, and more preferably 0.24 or less.

The above ratio is preferably satisfied when the internal pressure of the tire is 200 kPa or more, more preferably when it is 220 kPa or more, and even more preferably when it is 280 kPa or more. This is because rolling resistance can be reduced. On the other hand, the above ratio is preferably satisfied when the internal pressure of the tire is 350 kPa or less. This is because ride comfort can be improved.

From the viewpoint of maintaining the ground contact area, the tire cross-sectional width SW is preferably 105 mm or more, more preferably 125 mm or more, even more preferably 135 mm or more, and particularly preferably 145 mm or more, within the range in which the above ratio is satisfied. On the other hand, from the viewpoint of reducing air resistance, the tire cross-sectional width SW is preferably 155 mm or less, within the range in which the above ratio is satisfied. From the viewpoint of reducing rolling resistance, the tire outer diameter OD is preferably 500 mm or more, more preferably 550 mm or more, and even more preferably 580 mm or more, within the range in which the above ratio is satisfied. On the other hand, from the viewpoint of reducing air resistance, the tire outer diameter OD is preferably 800 mm or less, more preferably 720 mm or less, even more preferably 650 mm or less, and particularly preferably 630 mm or less, within the range in which the above ratio is satisfied. From the viewpoint of reducing rolling resistance, the rim diameter is preferably 16 inches or more, more preferably 17 inches or more, and even more preferably 18 inches or more, providing that the tire cross-sectional width SW and the outer diameter OD satisfy the above ratio. On the other hand, from the viewpoint of reducing air resistance, the rim diameter is preferably 22 inches or less, more preferably 21 inches or less, even more preferably 20 inches or less, and particularly preferably 19 inches or less, providing that the tire cross-sectional width SW and the outer diameter OD satisfy the above ratio. The aspect ratio of the tire is preferably 45 to 70, and more preferably 45 to 65, providing that the tire cross-sectional width SW and the outer diameter OD satisfy the above ratio.

In an example, the specific size of the tire may be, but is not particularly limited to, 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, or 155/70R19.

In another example, the tire has a shape with a narrow width and a large diameter, with a tire cross-sectional width SW of 165 (mm) or more, wherein the tire cross-sectional width SW (mm) and the outer diameter OD (mm) satisfy the relational expression

$$OD \ (mm) \geq 2.135 \times SW \ (mm) \ + 282.3.$$

By satisfying the above relational expression, air resistance can be reduced, and rolling resistance can be reduced, whereby the fuel efficiency of the tire can be improved.

In a second embodiment, the ratio SW/OD is preferably 0.26 or less, more preferably 0.25 or less, and even more preferably 0.24 or less, providing that the tire cross-sectional width SW and the outer diameter OD satisfy the above expressional expression. This is because the fuel efficiency of the tire can be further improved.

The above relational expression and/or the ratio are/is preferably satisfied when the internal pressure of the tire is 200 kPa or more, more preferably when it is 220 kPa or more, and even more preferably when it is 280 kPa or more. This is because rolling resistance can be reduced. On the other hand, the above relational expression and/or the ratio are/is satisfied when the internal pressure of the tire is 350 kPa or less. This is because ride comfort can be improved.

Here, from the viewpoint of maintaining the ground contact area, the tire cross-sectional width SW is preferably 175 mm or more, and more preferably 185 mm or more, within the range in which the above relational expression is satisfied. On the other hand, from the viewpoint of reducing air resistance, the tire cross-sectional width SW is preferably 230 mm or less, more preferably 215 mm or less, even more preferably 205 mm or less, and particularly preferably 195 mm or less, within the range in which the above relational expression is satisfied. From the viewpoint of reducing rolling resistance, the tire outer diameter OD is preferably 630 mm or more, and more preferably 650 mm or more, within the range in which the above relational expression is satisfied. On the other hand, from the viewpoint of reducing air resistance, the tire outer diameter OD is preferably 800 mm or less, more preferably 750 mm or less, and even more preferably 720 mm or less, within the range in which the above relational expression is satisfied. Furthermore, from the viewpoint of reducing rolling resistance, the rim diameter is preferably 18 inches or more, and more preferably 19 inches or more, providing that the tire cross-sectional width SW and the outer diameter OD satisfy the above relational expression. On the other hand, from the viewpoint of reducing air resistance, the rim diameter is preferably 22 inches or less, and more preferably 21 inches or less, providing that the tire cross-sectional width SW and the outer diameter OD satisfy the above relational expression. Moreover, the aspect ratio of the tire is preferably 45 to 70, and more preferably 45 to 65, providing that the tire cross-sectional width SW and the outer diameter OD satisfy the above relational expression.

In an example, the specific size of the tire may be, but is not particularly limited to, 165/45R22, 165/55R18, 165/55R19, 165/55R20, 165/55R21, 165/60R19, 165/65R19, 165/70R18, 175/45R23, 175/55R 19, 175/55R20, 175/55R22, 175/60R18, 185/45R22, 185/50R20, 185/55R19, 185/55R20, 185/60R19, 185/60R20, 195/50R20, 195/55R20, 195/60R19, 205/50R 21, 205/55R20, or 215/50R21.

In yet another example, the tire has a shape with a narrow width and a large diameter, wherein the tire cross-sectional width SW (mm) and the outer diameter OD (mm) satisfy the relational expression

$$OD \ (mm) \ \geq \ -0.0187 \ \times SW \ (mm)2 \ + 9.15 \ \times SW \ (mm) - 380.$$

By satisfying the above relational expression, air resistance can be reduced, and rolling resistance can be reduced, whereby the fuel efficiency of the tire can be improved.

In a third embodiment, the ratio SW/OD is preferably 0.26 or less, more preferably 0.25 or less, and even more preferably 0.24 or less, providing that the tire cross-sectional width SW and the outer diameter OD satisfy the above expressional expression. This is because the fuel efficiency of the tire can be further improved.

The above relational expression and/or the ratio are/is preferably satisfied when the internal pressure of the tire is 200 kPa or more, more preferably when it is 220 kPa or more, and even more preferably when it is 280 kPa or more. This is because rolling resistance can be reduced. On the other hand, the above relational expression and/or the ratio are/is preferably satisfied when the internal pressure of the tire is 350 kPa or less. This is because ride comfort can be improved.

Here, from the viewpoint of maintaining the ground contact area, the tire cross-sectional width SW is preferably 105 mm or more, more preferably 125 mm or more, even more preferably 135 mm or more, and particularly preferably 145 mm or more, within the range in which the above relational expression is satisfied. On the other hand, from the viewpoint of reducing air resistance, the tire cross-sectional width SW is preferably 230 mm or less, more preferably 215 mm or less, even more preferably 205 mm or less, and particularly preferably 195 mm or less, within the range in which the above relational expression is satisfied. From the viewpoint of reducing rolling resistance, the tire outer diameter OD is preferably 500 mm or more, more preferably 550 mm or more, and even more preferably 580 mm or more, within the range in which the above relational expression is satisfied. On the other hand, from the viewpoint of reducing air resistance, the tire outer diameter OD is preferably 800 mm or less, more preferably 750 mm or less, and even more preferably 720 mm or less, within the range in which the above relational expression is satisfied. Furthermore, from the viewpoint of reducing rolling resistance, the rim diameter is preferably 16 inches or more, more preferably 17 inches or more, and even more preferably 18 inches or more, providing that the tire cross-sectional width SW and the outer diameter OD satisfy the above relational expression. On the other hand, from the viewpoint of reducing air resistance, the rim diameter is preferably 22 inches or less, more preferably 21 inches or less, and even more preferably 20 inches or less, providing that the tire cross-sectional width SW and the outer diameter OD satisfy the above relational expression. Moreover, the aspect ratio of the tire is preferably 45 to 70, and more preferably 45 to 65, providing that the tire cross-sectional width SW and the outer diameter OD satisfy the above relational expression.

In an example, the specific size of the tire may be, but is not particularly limited to, 105/50R16, 115/50R17, 125/55R20, 125/60R18, 125/65R19, 135/45R21, 135/55R20, 135/60R17, 135/60R18, 135/60R19, 135/65R19, 145/45R21, 145/55R20, 145/60R16, 145/60R17, 145/60R18, 145/60R19, 145/65R19, 155/45R18, 155/45R21, 155/55R18, 155/55R19, 155/55R21, 155/60R17, 155/65R18, 155/70R17, 155/70R19, 165/45R22, 165/55R18, 165/55R19, 165/55R20, 165/55R21, 165/60R19, 165/6R19, 165/70R18, 175/45R23, 175/55R18, 175/55R19, 175/55R20, 175/55R22, 175/60R18, 185/45R22, 185/50R20, 185/55R19, 185/55R20, 185/60R19, 185/60R20, 195/50R20, 195/55R20, 195/60R19, 205/50R21, 205/55R20, or 215/50R21.

Here, a tire with the aforementioned lightweight configuration may suffer a decrease in cornering power due to a decrease in lateral spring coefficient.

To address the above, the present inventors have conducted studies and found that an increased rotational component of lateral displacement, among translation, rotational, and bending components, is the cause of a decrease in lateral spring coefficient, when out-of-plane bending acts on a bead portion 2 (in particular, in a case in which the height of the bead fillers 2b is set to 25 mm or less as mentioned above, the stiffness of the bead portions decreases, and the degree of out-of-plane bending increases). Furthermore, it has been found that the out-of-plane bending acts as a tensile force on the side of the bead portion 2 that is closer to a tire inner surface, while also acting as a compressive force on the side of the bead portion that is close to the tire outer surface, and that a decrease in lateral spring coefficient can be prevented, in particular by withstanding the compressive force on the side of the bead portion 2 that is closer to the tire outer surface (inner side of the bending). This is the reason why the highly rigid ($0.4 \le E2'/E1' \le 1$) rubber chafers 8 are disposed on the outer side in the tire width direction of the bead fillers 2b as described above. As a result, even when a compressive force acts on the side the bead portions 2 that is closer to the tire outer surface, the highly rigid rubber chafers 8 can prevent an increase in the rotational component of the lateral displacement, thus preventing a decrease in lateral spring coefficient, thereby further preventing a decrease in cornering power.

Setting the ratio E2'/E1' to 0.4 or more can effectively prevent an increase in the rotational component of lateral displacement. On the other hand, setting the ratio E2'/E1' to 1 or less can prevent the tire from coming off the rim due to a decrease in friction coefficient at the contact area with the rim.

Although it is particularly effective in the aforementioned lightweight configuration as in the present embodiment, even in a case in which the aforementioned lightweight configuration is not adopted, the effect of further preventing a decrease in cornering power can be obtained, because the highly rigid rubber chafers 8 can prevent an increase in the rotational component of lateral displacement due to a compressive force acting on the side of the bead portions 2 that is closer to the tire outer surface.

Here, for the same reason as above, the ratio E2 ' /E1 ' preferably further satisfies

$$0.6 \le E2'/E1' \le 1.$$

The length in the tire radial direction of the rubber chafers is preferably 30 to 60 mm. Setting the length to 30 mm or more can more fully provide the effect of preventing an increase in the rotational component of lateral displacement, while setting the length to 60 mm or less can minimize weight increase due to the disposition of the rubber chafers.

The outer ends in the tire radial direction of the rubber chafers are preferably located further outward in the tire radial direction than the rim separation point. That way, a wider area on which out-of-plane bending acts is covered, and the effect of preventing an increase in the rotational component of lateral displacement can be more fully obtained.

The inner ends in the tire radial direction of the rubber chafers are preferably located further inward in the tire radial direction than the inner ends in the tire radial direction of the bead cores. That way, a wider area on which out-of-plane bending acts is covered, and the effect of preventing an increase in the rotational component of lateral displacement can be more fully obtained.

EXAMPLES

In order to verify advantageous effects of the present invention, Example tire, Comparative Example tire, and Conventional Example tire were experimentally produced, and their performance was evaluated. Each tire includes: a pair of bead cores embedded in a pair of bead portions; and a carcass including one or more carcass plies extending in a toroidal form between the pair of bead cores, wherein bead fillers are disposed on an outer side in a tire radial direction of the bead cores, and rubber chafers are provided on an outer side in a tire width direction of the bead fillers. The specifications of each tire are summarized in Table 1 below. In Table 1, "side portion" means "sidewall portion", and "side portion gauge" means a rubber gauge at a tire maximum width position. Furthermore, BF is an abbreviation for "bead filler", and GC for "rubber chafer." Lateral spring coefficients were measured, by mounting each tire on a rim, measuring the amount of deflection using an indoor tester, and measuring the lateral spring coefficient from a tangential gradient at a load of 4 kN. The weight of each tire before rim mounting was also measured. In Table 1, evaluation results are presented as an index with the Conventional Example being 100.

[Table 1]

|  |  | Conventional Example | Comparative Example | Example |
|---|---|---|---|---|
| Side portion gauge [mm] |  | 2.6 | 1 | 1 |
| Reinforcing member | Position | Bead portion | N/A | Side portion |
|  | Angle | 45° | N/A | 45° |
| GC/BF rubber hardness | $E2'/E1'$ | 0.38 | 0.38 | 1 |
| GC height [mm] |  | 45 | 45 | 45 |
| BF height [mm] |  | 30 | 10 | 10 |
| Weight [%] *the smaller the better |  | 100 | 80 | 81 |
| Lateral spring [%] *the greater the better |  | 100 | 89 | 119 |

REFERENCE SIGNS LIST

1    Pneumatic tire
2    Bead portion
3    Carcass
4    Belt
5    Tread portion
6    Sidewall portion
7    Reinforcing member
8    Rubber chafer

**Claims**

**1.** A pneumatic tire (1) comprising:

a pair of bead portions (2); and
a carcass (3) including one or more carcass plies of radially arranged cords that extend in a toroidal form between the pair of bead portions, wherein
a reinforcing member (7) is provided so as to extend at an angle with respect to a tire radial direction in an area including a tire maximum width position of the pneumatic tire that stretches in the tire radial direction on an outer side in a tire width direction of the carcass in a reference state in which the pneumatic tire is mounted on an applicable rim, a specified internal pressure is applied, and no load is applied,
a height in the tire radial direction of a bead filler (2b) is less than or equal to half of a height of a rubber chafer (8),
**characterized in that**
inner ends in the tire radial direction of the rubber chafer (8) are located further inward in the tire radial direction than inner ends in the tire radial direction of a bead core (2a).

2. The pneumatic tire (1) according to claim 1, wherein the reinforcing member (7) comprises organic fiber cords.

3. The pneumatic tire (1) according to claim 1 or 2, wherein the reinforcing member (7) extends at an angle of 30° to 60° with respect to the tire radial direction.

4. The pneumatic tire (1) according to claim 3, wherein the reinforcing member (7) extends at an angle of 40° to 50° with respect to the tire radial direction.

5. The pneumatic tire (1) according to any one of claims 1 to 4, wherein a length in the tire radial direction of the reinforcing member (7) is 10 to 40% of a height of a cross-section of the tire.


**Patentansprüche**

1. Luftreifen (1), umfassend:

   ein Paar von Wulstabschnitten (2); und
   eine Karkasse (3), einschließlich einer oder mehrerer Karkassenlagen aus radial angeordneten Corden, die sich in einer toroidalen Form zwischen dem Paar von Wulstabschnitten erstrecken, wobei
   ein Verstärkungselement (7) bereitgestellt ist, um sich bezüglich einer Reifenradialrichtung in einem Winkel in einem Bereich zu erstrecken, der eine Position maximaler Reifenbreite des Luftreifens einschließt und sich in der Reifenradialrichtung auf einer Außenseite der Karkasse in einer Reifenbreitenrichtung in einem Referenzzustand ausdehnt, in dem der Luftreifen auf einer geeigneten Felge montiert ist, wobei ein spezifizierter Innendruck angelegt ist und keine Last angelegt ist,
   eine Höhe eines Wulstfüllers (2b) in der Reifenradialrichtung weniger als oder gleich der Hälfte einer Höhe eines Gummiwulstbands (8) beträgt, **dadurch gekennzeichnet, dass**
   sich inneren Enden des Gummiwulstbands (8) in der Reifenradialrichtung sich in der Reifenradialrichtung weiter einwärts befinden als inneren Enden eines Wulstkerns (2a) in der Reifenradialrichtung.

2. Luftreifen (1) nach Anspruch 1, wobei das Verstärkungselement (7) organische Fasercords umfasst.

3. Luftreifen (1) nach Anspruch 1 oder 2, wobei sich das Verstärkungselement (7) bezüglich der Reifenradialrichtung in einem Winkel von 30° bis 60° erstreckt.

4. Luftreifen (1) nach Anspruch 3, wobei sich das Verstärkungselement (7) bezüglich der Reifenradialrichtung in einem Winkel von 40° bis 50° erstreckt.

5. Luftreifen (1) nach einem der Ansprüche 1 bis 4, wobei eine Länge des Verstärkungselements (7) in der Reifenradialrichtung 10 bis 40 % einer Höhe eines Querschnitts des Reifens beträgt.


**Revendications**

1. Pneu pneumatique (1) comprenant :

   une paire de parties de talon (2) ; et
   une carcasse (3) incluant une ou plusieurs couches de carcasse constituées de cordes agencées radialement qui s'étendent sous forme toroïdale entre la paire de parties de talon, dans lequel
   un élément d'armature (7) est prévu de manière à s'étendre à un angle par rapport à une direction radiale de pneu dans une zone incluant une position de largeur maximale de pneu du pneu pneumatique qui s'étend dans la direction radiale de pneu sur un côté extérieur dans une direction de largeur de pneu de la carcasse dans un état de référence dans lequel le pneu pneumatique est monté sur une jante appropriée, une pression interne spécifiée est appliquée et aucune charge n'est appliquée,
   une hauteur dans la direction radiale de pneu d'une charge de talon (2b) est inférieure ou égale à la moitié d'une hauteur d'une toile en caoutchouc (8), **caractérisé en ce que**
   des extrémités intérieures dans la direction radiale de pneu de la toile en caoutchouc (8) sont situées plus à l'intérieur dans la direction radiale de pneu que des extrémités intérieures dans la direction radiale de pneu d'une tringle (2a).

9

2. Pneu pneumatique (1) selon la revendication 1, dans lequel l'élément d'armature (7) comprend des cordes en fibres organiques.

3. Pneu pneumatique (1) selon la revendication 1 ou 2, dans lequel l'élément d'armature (7) s'étend à un angle de 30° à 60° par rapport à la direction radiale de pneu.

4. Pneu pneumatique (1) selon la revendication 3, dans lequel l'élément d'armature (7) s'étend à un angle de 40° à 50° par rapport à la direction radiale de pneu.

5. Pneu pneumatique (1) selon l'une quelconque des revendications 1 à 4, dans lequel une longueur dans la direction radiale de pneu de l'élément d'armature (7) est de 10 à 40 % d'une hauteur d'une section transversale du pneu.

# FIG. 1

FIG. 2

**EP 4 282 667 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0558119 A
- JP H06199113 A
- JP H07144513 A

- EP 1769947 A1
- US 2017072750 A1
- JP 2019137327 A